# EUROPEAN PATENT APPLICATION

(11) **EP 4 286 756 A1**
(43) Date of publication of application: **06.12.2023**
(21) Application number: 21922896.2
(22) Date of filing: 29.01.2021
(51) Int. Cl.: F24F 7/007

(54) **VENTILATION SYSTEM**

(71) Applicant: MITSUBISHI ELECTRIC CORPORATION, Chiyoda-ku Tokyo 100-8310 (JP)
(72) Inventor: HIRASAWA, Haruyuki, Tokyo 100-8310 (JP); KOMAE, Sota, Tokyo 100-8310 (JP); FUKAYA, Yoshihiro, Tokyo 100-8310 (JP); ARAI, Hidemoto, Tokyo 100-8310 (JP)
(74) Representative: Mewburn Ellis LLP
(86) International application number: PCT/JP2021/003284
(87) International publication number: WO 2022/162880

(57) **Abstract**

A ventilation system (100) includes: an air supply unit that supplies air taken in from outside to an inside of a first room; an exhaust unit that exhausts indoor air from the first room to the outside; and a control unit that controls a volume of air to be supplied by the air supply unit and a volume of air to be exhausted by the exhaust unit. The air supply unit and the exhaust unit of the ventilation system (100) are provided in the first room in a building, the indoor air of the first room being polluted. In a case where the control unit controls the volume of air to be supplied by the air supply unit in the first room and the volume of air to be exhausted by the exhaust unit in the first room in a normal ventilation mode in which the volume of air to be supplied by the air supply unit is equal to the volume of air to be exhausted by the exhaust unit, the control unit controls operation of the air supply unit and the exhaust unit in a specific ventilation mode in which the volume of air to be supplied by the air supply unit in the first room and the volume of air to be exhausted by the exhaust unit in the first room are increased as compared with the volumes in the normal ventilation mode and the volume of air to be exhausted by the exhaust unit in the first room is made greater than the volume of air to be supplied by the air supply unit in the first room so as to put the first room under negative pressure.

## Description

### Field

The present disclosure relates to a ventilation system that changes ventilation conditions according to the state of pollution of air.

### Background

Patent Literature 1 discloses a ventilation system including an outdoor air quality measurement means and an indoor air quality measurement means. When air taken in from the outside of a room is supplied to an indoor space to ventilate the indoor space, the outdoor air quality measurement means measures a physical property value of outside air, and the indoor air quality measurement means measures a physical property value of indoor air. The ventilation system has a supply air/exhaust air balance adjustment mode in which when the indoor air quality measurement means determines that air pollutants have been generated, the ventilation system exhausts an excessively large volume of air from a relevant room, and supplies an excessively large volume of air to other rooms.

The ventilation system of Patent Literature 1 focuses primarily on preventing dispersion of air pollutants into other rooms, so that the ventilation system exhausts an excessively large volume of air from the room where air pollutants have been generated, and supplies an excessively large volume of air to the other rooms where generation of air pollutants has not been detected. As a result, air flows are formed such that indoor air in the other rooms is exhausted from the other rooms to the outside via the polluted room.

### Citation List

### Patent Literature

Patent Literature 1: Japanese Patent Application Laid-open No. 2016-138705

### Summary

### Technical Problem

However, planned ventilation is based on taking fresh outside air directly into a room. The flow of ventilation air as generated in the ventilation system of Patent Literature 1 described above causes outside air to be supplied to a polluted room via another room, so that fresh outside air is not taken into the polluted room. That is, even if it is determined that air pollutants have been generated in a room, the ventilation performed by the ventilation system of Patent Literature 1 cannot purify indoor air by taking fresh outside air into the room.

In addition, the fact that it is determined that no air pollutants have been generated in the other rooms just means that the amount of pollutant that can be detected by the air quality measurement means has not reached a detectable level in the other rooms, and does not always mean that air in the other rooms is clean. Therefore, there is a risk of newly carrying in different pollutants that have not yet presented in the room for which it is determined that air pollutants have been generated.

The present disclosure has been made in view of the above, and an object of the present disclosure is to provide a ventilation system capable of preventing indoor air in a polluted room, which is a room with polluted indoor air, from dispersing into other rooms, and appropriately purifying the indoor air in the polluted room by taking fresh outside air into the polluted room.

### Solution to Problem

In order to solve the above-described problems and achieve the object, a ventilation system according to the present disclosure includes: an air supply unit that supplies air taken in from outside to an inside of a first room; an exhaust unit that exhausts indoor air from the first room to the outside; and a control unit that controls a volume of air to be supplied by the air supply unit and a volume of air to be exhausted by the exhaust unit. The air supply unit and the exhaust unit of the ventilation system are provided in the first room in a building, the indoor air of the first room being polluted. In a case where the control unit controls the volume of air to be supplied by the air supply unit in the first room and the volume of air to be exhausted by the exhaust unit in the first room in a normal ventilation mode in which the volume of air to be supplied by the air supply unit is equal to the volume of air to be exhausted by the exhaust unit, the control unit controls operation of the air supply unit and the exhaust unit in a specific ventilation mode in which the volume of air to be supplied by the air supply unit in the first room and the volume of air to be exhausted by the exhaust unit in the first room are increased as compared with the volumes in the normal ventilation mode and the volume of air to be exhausted by the exhaust unit in the first room is made greater than the volume of air to be supplied by the air supply unit in the first room so as to put the first room under negative pressure.

### Advantageous Effects of Invention

The present disclosure achieves the effect of enabling indoor air in a polluted room, which is a room with polluted indoor air, to be prevented from dispersing into other rooms, and enabling fresh outside air to be taken into the polluted room to appropriately purify the indoor air in the polluted room.

### Brief Description of Drawings

FIG. 1 is a diagram illustrating a configuration of a ventilation system according to a first embodiment.
FIG. 2 is a block diagram illustrating a functional configuration of a ventilation apparatus of the ventilation system according to the first embodiment.
FIG. 3 is a block diagram illustrating a functional configuration of a control apparatus of the ventilation system according to the first embodiment.
FIG. 4 is a block diagram illustrating a functional configuration of an air pollution detection unit of the ventilation system according to the first embodiment.
FIG. 5 is a floor plan illustrating a structure of a house in which the ventilation system according to the first embodiment has been installed.
FIG. 6 is a diagram showing an example of a hardware configuration of processing circuitry in the first embodiment.
FIG. 7 is a flowchart illustrating a procedure of operation of one of ventilation apparatuses of the ventilation system according to the first embodiment.
FIG. 8 is a flowchart illustrating a procedure of cooperative operation of a plurality of the ventilation apparatuses of the ventilation system according to the first embodiment.
FIG. 9 is a diagram showing an example of a first relational table provided in the ventilation system according to the first embodiment.
FIG. 10 is a diagram showing an example of a second relational table provided in the ventilation system according to the first embodiment.
FIG. 11 is a diagram illustrating a schematic configuration of a heat exchange ventilation apparatus included in the ventilation system according to the first embodiment.

### Description of Embodiments

Hereinafter, a ventilation system according to an embodiment will be described in detail with reference to the drawings.

### First Embodiment.

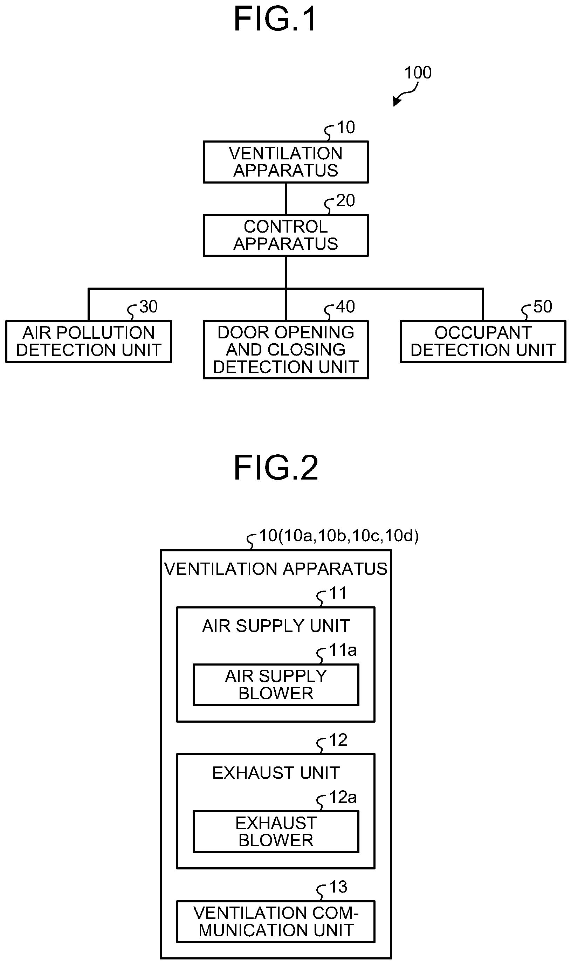

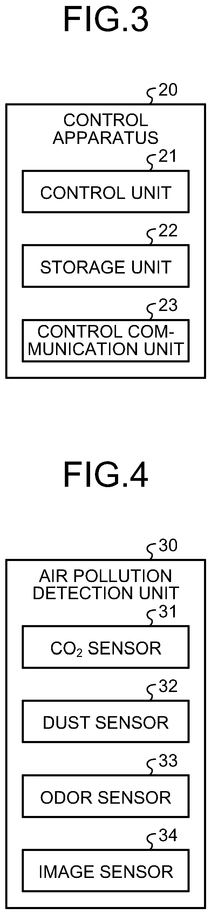

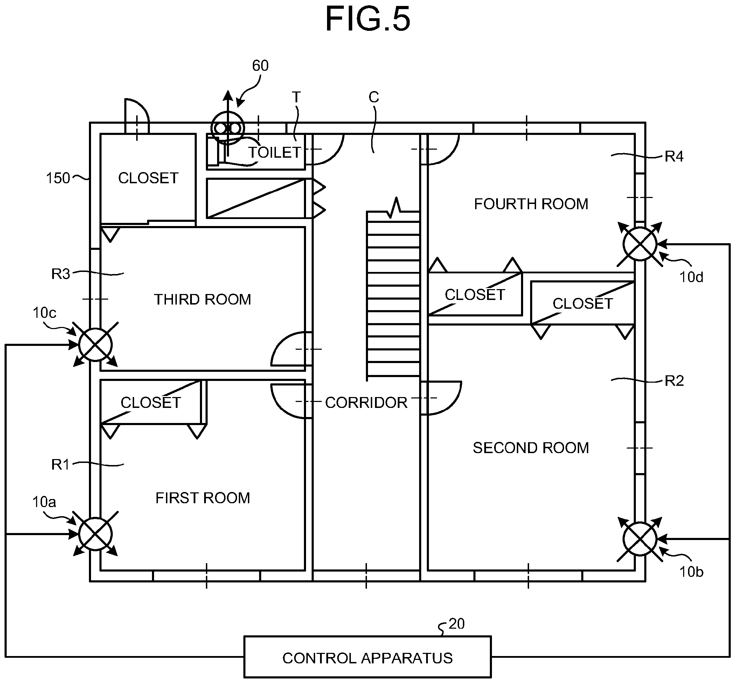

FIG. 1 is a diagram illustrating a configuration of a ventilation system 100 according to a first embodiment. FIG. 2 is a block diagram illustrating a functional configuration of a ventilation apparatus 10 of the ventilation system 100 according to the first embodiment. FIG. 3 is a block diagram illustrating a functional configuration of a control apparatus 20 of the ventilation system 100 according to the first embodiment. FIG. 4 is a block diagram illustrating a functional configuration of an air pollution detection unit 30 of the ventilation system 100 according to the first embodiment. FIG. 5 is a floor plan illustrating a structure of a house in which the ventilation system 100 according to the first embodiment has been installed. Arrows in FIG. 5 indicate directions in which air flows. In FIG. 5, arrows directed from the insides of rooms to the outside of the rooms indicate exhaust air. In FIG. 5, arrows directed from the outside of the rooms to the insides of the rooms indicate supply air.

The ventilation system 100 includes the ventilation apparatus 10, the control apparatus 20, the air pollution detection unit 30, a door opening and closing detection unit 40, and an occupant detection unit 50. The ventilation apparatus 10 is installed such that the inside of a room communicates with the outside, and performs indoor ventilation. The control apparatus 20 controls operation of the ventilation apparatus 10. The air pollution detection unit 30 detects a state of pollution of indoor air which is air in the room.

The ventilation apparatus 10 is provided in a room in a house, and is installed on a wall 150 of a building constituting the house, and performs indoor ventilation. That is, the ventilation apparatus 10 is fitted into the wall 150 of the building, which is a wall separating an indoor space in the building from an outdoor space, and allows the indoor space to communicate with the outdoor space. The ventilation apparatus 10 includes an air supply unit 11, an exhaust unit 12, and a ventilation communication unit 13.

The air supply unit 11 includes an air supply blower 11a that generates a supply air flow from the outside of the building to the inside of the room. The air supply blower 11a includes an impeller (not illustrated) and an air supply motor (not illustrated) that rotates the impeller. As the air supply blower 11a is driven, outside air which is outdoor air is supplied into the room.

It is possible to control the volume of air from the air supply blower 11a by controlling the rotational speed of the air supply motor. That is, it is possible to change the volume of air to be supplied by the air supply unit 11, which is the volume of air blow to be supplied by the ventilation apparatus 10, by changing the rotational speed of the air supply motor to change the volume of air from the air supply blower 11a. The speed of rotation of the air supply motor changes in accordance with control performed by the control apparatus 20. That is, the volume of air blow and the air intake volume to be supplied by the ventilation apparatus 10 are changed by control performed by the control apparatus 20.

The exhaust unit 12 includes an exhaust blower 12a that generates an exhaust flow from the inside of the room to the outside of the building. The exhaust blower 12a includes an impeller (not illustrated) and an exhaust motor (not illustrated) that rotates the impeller. As the exhaust blower 12a is driven, indoor air is exhausted to the outside of the building.

It is possible to control the volume of air from the exhaust blower 12a by controlling the rotational speed of the exhaust motor. That is, it is possible to change the volume of air to be exhausted by the exhaust unit 12, which is the volume of air blow to be exhausted by the ventilation apparatus 10, by changing the rotational speed of the exhaust motor to change the volume of air from the exhaust blower 12a. The speed of rotation of the exhaust motor changes in accordance with control performed by the control apparatus 20. That is, the volume of air blow and the air exhaust volume to be exhausted by the ventilation apparatus 10 are changed by control performed by the control apparatus 20.

The ventilation communication unit 13 communicates with the control apparatus 20.

The building constituting the house illustrated in FIG. 5 includes a first room R1, a second room R2, a third room R3, a fourth room R4, a toilet T, and a corridor C. The first room R1, the second room R2, the third room R3, and the fourth room R4 are rooms such as a living room.

A first ventilation apparatus 10a that is the ventilation apparatus 10 for the first room R1 is disposed in the first room R1. The first ventilation apparatus 10a is installed such that the inside of the first room R1 communicates with the outside of the building, and ventilates the inside of the first room R1. A second ventilation apparatus 10b that is the ventilation apparatus 10 for the second room R2 is disposed in the second room R2. The second ventilation apparatus 10b is installed such that the inside of the second room R2 communicates with the outside of the building, and ventilates the inside of the second room R2. A third ventilation apparatus 10c that is the ventilation apparatus 10 for the third room R3 is disposed in the third room R3. The third ventilation apparatus 10c is installed such that the inside of the third room R3 communicates with the outside of the building, and ventilates the inside of the third room R3. A fourth ventilation apparatus 10d that is the ventilation apparatus 10 for the fourth room R4 is disposed in the fourth room R4. The fourth ventilation apparatus 10d is installed such that the inside of the fourth room R4 communicates with the outside of the building, and ventilates the inside of the fourth room R4.

The second ventilation apparatus 10b, the third ventilation apparatus 10c, and the fourth ventilation apparatus 10d have the same configuration as the first ventilation apparatus 10a.

The air pollution detection unit 30 detects a state of pollution of indoor air that is air in a room in which the air pollution detection unit 30 is installed, and transmits, as a detection result, information on the state of pollution of the indoor air to the control apparatus 20. The air pollution detection unit 30 is set in every room where the ventilation apparatus 10 is installed. The air pollution detection unit 30 includes a communication unit (not illustrated) that communicates with the control apparatus 20. The air pollution detection unit 30 and the control apparatus 20 may perform wireless communication such as infrared communication, Wi-Fi (registered trademark), or Bluetooth (registered trademark), or may perform wire communication. The air pollution detection unit 30 detects the state of pollution of indoor air with a predetermined period.

Examples of the state of pollution of indoor air include a state of indoor air pollution by carbon dioxide (CO₂), a state of indoor air pollution by dust, and a state of indoor air pollution by odorous components.

The air pollution detection unit 30 includes, as a sensor for detecting the state of pollution of indoor air, at least one of various sensors such as a CO₂ sensor 31, a dust sensor 32, and an odor sensor 33, and detects the state of pollution of indoor air. The CO₂ sensor 31 detects the concentration of CO₂ in indoor air. The dust sensor 32 detects the concentration of dust in indoor air. The odor sensor 33 detects information on an odor from indoor air. Note that the sensor for detecting the state of pollution of indoor air, included in the air pollution detection unit 30 is not limited to the above-described sensors.

The control apparatus 20 controls operation of the ventilation apparatus 10. The control apparatus 20 includes a control unit 21, a storage unit 22, and a control communication unit 23.

The control unit 21 controls operation of the ventilation apparatus 10, that is, operation and the stopping of operation of the air supply unit 11 and the exhaust unit 12. The control unit 21 controls operation of the ventilation apparatus 10 in such a way as to prevent indoor air pollutants from dispersing into other rooms and, conversely, to minimize the effect of the other rooms on the polluted room. Then, the control unit 21 sets the volume of air to be supplied by the air supply unit 11 in the ventilation apparatus 10 in accordance with the state of pollution of indoor air detected by the air pollution detection unit 30, and instructs the air supply blower 11a to operate. In addition, the control unit 21 sets the volume of air to be exhausted by the exhaust unit 12 in the ventilation apparatus 10 in accordance with the state of pollution of indoor air detected by the air pollution detection unit 30, and instructs the exhaust blower 12a to operate. That is, the control unit 21 controls operation of the ventilation apparatus 10 in accordance with information on the state of pollution of indoor air detected by the air pollution detection unit 30.

The control unit 21 controls ventilation operation of the ventilation apparatus 10 depending on whether an operation mode of the ventilation apparatus 10 is a normal ventilation mode or a specific ventilation mode.

The normal ventilation mode is a ventilation mode in which the volume of air to be supplied by the air supply unit 11, which is the volume of air blow to be supplied by the ventilation apparatus 10, is equal to the volume of air to be exhausted by the exhaust unit 12, which is the volume of air blow to be exhausted by the ventilation apparatus 10. Therefore, there is no difference in indoor air pressure between a case where indoor air is ventilated in the normal ventilation mode and a case where no ventilation is performed.

The specific ventilation mode is a ventilation mode to be performed when it is detected that indoor air in the room is dirty. The specific ventilation mode is a ventilation mode in which the volume of air to be supplied by the air supply unit 11 is different from the volume of air to be exhausted by the exhaust unit 12.

The storage unit 22 stores various types of information to be used to control operation of the ventilation apparatus 10.

The control communication unit 23 communicates with other devices in the ventilation system 100.

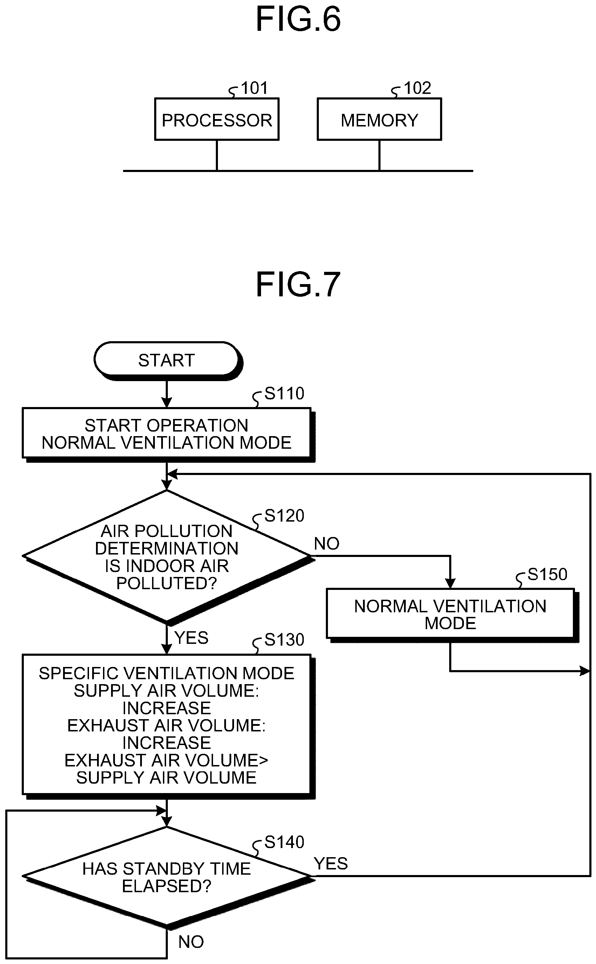

The control apparatus 20 is implemented as, for example, processing circuitry having a hardware configuration illustrated in FIG. 6. FIG. 6 is a diagram showing an example of a hardware configuration of processing circuitry in the first embodiment. In a case where the control apparatus 20 is implemented by the processing circuitry illustrated in FIG. 6, the control apparatus 20 is implemented by executing programs stored in a memory 102 by a processor 101. In addition, a plurality of processors and a plurality of memories may cooperate to implement the above-described functions. In addition, some of the functions of the control apparatus 20 may be implemented as an electronic circuit, and other functions may be implemented by use of the processor 101 and the memory 102.

The door opening and closing detection unit 40 detects a state of opening and closing of a door of a room, and transmits, as a detection result, information on the state of opening and closing of the door to the control unit 21 of the control apparatus 20. The door opening and closing detection unit 40 is set in every room where the ventilation apparatus 10 is installed. The door opening and closing detection unit 40 includes a communication unit (not illustrated) that communicates with the control apparatus 20. The door opening and closing detection unit 40 and the control apparatus 20 may perform wireless communication such as infrared communication, Wi-Fi, or Bluetooth, or may perform wire communication. The door opening and closing detection unit 40 detects a state of opening and closing of the door of the room with a predetermined period.

The occupant detection unit 50 detects whether there is a person in a room and the number of persons in the room, and transmits, as a detection result, information as to whether there is a person in the room to the control unit 21 of the control apparatus 20. The occupant detection unit 50 is set in every room where the ventilation apparatus 10 is installed. The occupant detection unit 50 includes a communication unit (not illustrated) that communicates with the control apparatus 20. The occupant detection unit 50 and the control apparatus 20 may perform wireless communication such as infrared communication, Wi-Fi, or Bluetooth, or may perform wire communication. The occupant detection unit 50 detects whether there is a person in the room, with a predetermined period.

Note that, as illustrated in FIG. 5, the control apparatus 20 may be connected to all the ventilation apparatuses 10 of the first ventilation apparatus 10a, the second ventilation apparatus 10b, the third ventilation apparatus 10c, and the fourth ventilation apparatus 10d. Alternatively, in a case where the ventilation apparatus 10 to be controlled by the control apparatus 20 is limited, the control apparatus 20 may be connected only to the ventilation apparatus 10 to be controlled by the control apparatus 20.

In addition, the control apparatus 20 may be independently provided as a controller in the house, or may be located on a server that is provided in the cloud and can communicate with each ventilation apparatus 10 through the Internet of Things (IoT) communication or the like. In addition, when the control apparatus 20 controls only one of the ventilation apparatuses 10, the control apparatus 20 may be incorporated in the one of the ventilation apparatuses 10.

Furthermore, the air pollution detection unit 30 may be incorporated in the ventilation apparatus 10, or may be independently provided in the room. Thus, an air pollution detection unit may be used which is incorporated in another product such as an air conditioner disposed in the room.

Moreover, the door opening and closing detection unit 40 may be incorporated in the ventilation apparatus 10, or may be provided independently in the room.

In addition, the occupant detection unit 50 may be incorporated in the ventilation apparatus 10, or may be independently provided in the room. Thus, an occupant detection unit may be used which is incorporated in another product such as an air conditioner disposed in the room.

Furthermore, in the first embodiment, the first ventilation apparatus 10a installed in the first room R1 is configured such that the air supply unit 11 and the exhaust unit 12 are provided inside a housing (not illustrated) of the first ventilation apparatus 10a. Meanwhile, the first ventilation apparatus 10a may be configured such that an air supply ventilation device including the air supply unit 11 and the ventilation communication unit 13 and an exhaust ventilation device including the exhaust unit 12 and the ventilation communication unit 13 are separately provided.

An exhaust fan 60 is disposed in the toilet T. The exhaust fan 60 is an exhaust fan dedicated to the toilet T, and includes only an exhaust unit.

Next, operation of the ventilation system 100 will be described. First, operation of one of the ventilation apparatuses 10 will be described. Here, operation of the first ventilation apparatus 10a will be described. Note that operations of the second ventilation apparatus 10b, the third ventilation apparatus 10c, and the fourth ventilation apparatus 10d are similar to operation of the first ventilation apparatus 10a, respectively. FIG. 7 is a flowchart illustrating a procedure of operation of one of the ventilation apparatuses 10 of the ventilation system 100 according to the first embodiment.

In step S110, the control unit 21 of the control apparatus 20 starts control of operation of the first ventilation apparatus 10a in the normal ventilation mode. The volume of air to be supplied by the air supply unit 11 and the volume of air to be exhausted by the exhaust unit 12 of the first ventilation apparatus 10a in the normal ventilation mode are set to air volumes initially set in the storage unit 22 of the control apparatus 20 in advance. In addition, a user can change the volume of air to be supplied by the first ventilation apparatus 10a or the volume of air to be exhausted by the first ventilation apparatus 10a by inputting instruction information for changing the supply air volume or the exhaust air volume to the control unit 21 by use of an input unit (not illustrated) provided in the ventilation system 100.

Next, in step S120, the control unit 21 performs air pollution state determination regarding the first room R1 to determine whether indoor air in the first room R1 is polluted. The air pollution state determination refers to determination of the state of pollution of indoor air. Specifically, the control unit 21 performs control in such a way as to cause the air pollution detection unit 30 to start detection of the state of pollution of indoor air in the first room R1. The air pollution detection unit 30 detects the state of pollution of indoor air in the first room R1 in which the first ventilation apparatus 10a is installed, and transmits a result of detection of the state of pollution to the control unit 21.

The control unit 21 determines whether the indoor air in the first room R1 is polluted based on the result of detection of the state of pollution transmitted from the air pollution detection unit 30. The control unit 21 compares a value of the result of detection of the state of pollution of indoor air with a predetermined pollution state threshold, and determines that the indoor air in the first room R1 is polluted when the value of the detection result is equal to or greater than the pollution state threshold. The control unit 21 compares the value of the result of detection of the state of pollution of indoor air with the predetermined pollution state threshold, and determines that the indoor air in the first room R1 is not polluted when the value of the detection result is less than the pollution state threshold. The pollution state threshold described herein is a determination threshold to be used by the control unit 21 to determine whether to change the operation mode of the first ventilation apparatus 10a from the normal ventilation mode to the specific ventilation mode.

When the control unit 21 determines that the indoor air in the first room R1 is polluted, a determination of "Yes" is made in step S120, and the process proceeds to step S130. When the control unit 21 determines that the indoor air in the first room R1 is not polluted, a determination of "No" is made in step S120, and the process proceeds to step S150. When the control unit 21 determines that the indoor air in the first room R1 is polluted, the first room R1 is a "determined pollution room" that is a specific room for which a determination that indoor air is polluted has been made. The determined pollution room is the first room in the building.

In step S150, the control unit 21 determines that operation be continued in the normal ventilation mode, and the process returns to step S120.

In step S130, the control unit 21 controls operation of the first ventilation apparatus 10a in the specific ventilation mode for the first room R1 that is the first room for which a determination that indoor air is polluted has been made. In the specific ventilation mode, the control unit 21 performs control in such a way as to put the first room R1 under negative pressure by increasing the volume of air from the air supply blower 11a as compared with air volume in the normal ventilation mode to increase the volume of air to be supplied by the air supply unit 11, which is the volume of air blow to be supplied by the first ventilation apparatus 10a. Furthermore, in the specific ventilation mode, the control unit 21 performs control in such a way as to increase the volume of air to be exhausted by the exhaust unit 12, which is the volume of air blow to be exhausted by the first ventilation apparatus 10a, by increasing the volume of air from the exhaust blower 12a as compared with air volume in the normal ventilation mode. The first room R1 is a determined pollution room that is the first room for which a determination that indoor air is polluted has been made.

Here, the control unit 21 controls both increase of an increase in the volume of air to be supplied by the air supply unit 11 and the volume of air to be exhausted by the exhaust unit 12 such that the magnitude relationship between the volume of air to be supplied by the air supply unit 11 and the volume of air to be exhausted by the exhaust unit 12 is set as "the volume of air to be exhausted by the exhaust unit 12>the volume of air to be supplied by the air supply unit 11", that is, "the volume of air to be exhausted by the exhaust unit 12 is greater than the volume of air to be supplied by the air supply unit 11".

In step S130, it is possible to promptly exhaust the polluted indoor air from the first room R1 to the outside by increasing both the volume of air to be supplied by the air supply unit 11 and the volume of air to be exhausted by the exhaust unit 12 to increase the amount of ventilation to be performed by the first ventilation apparatus 10a. In this case, the reason why the magnitude relationship between the volume of air to be supplied by the air supply unit 11 and the volume of air to be exhausted by the exhaust unit 12 is set as "the volume of air to be exhausted by the exhaust unit 12>the volume of air to be supplied by the air supply unit 11" is to put the first room R1 under negative pressure so as to prevent the polluted air in the first room R1 from leaking out of the first room R1 to pollute the air in another clean room. As a result, it is possible to prevent air pollutants contained in the polluted air in the first room R1 from dispersing into rooms other than the first room R1.

In addition, when the volume of air to be supplied by the air supply unit 11 is different from the volume of air to be exhausted by the exhaust unit 12, the amount of ventilation to be performed by the ventilation apparatus 10 can be defined as the volume of air to be exhausted by the exhaust unit 12. It is also possible to promptly exhaust pollution components in air increasing as a result of flowing into the first room R1 from other rooms and to sufficiently take fresh outside air into the first room R1, by increasing the amount of ventilation of the first room R1 as a result of increasing the volume of air to be exhausted by the exhaust unit 12 to increase the amount of ventilation to be performed by the first ventilation apparatus 10a.

That is, in step S130, when the control unit 21 controls the volume of air to be supplied by the air supply unit 11 in the first room R1 and the volume of air to be exhausted by the exhaust unit 12 in the first room R1 in the normal ventilation mode in which the volume of air to be supplied by the air supply unit 11 is equal to the volume of air to be exhausted by the exhaust unit 12, the control unit 21 controls operation of the air supply unit 11 and the exhaust unit 12 in the specific ventilation mode in which the volume of air to be supplied by the air supply unit 11 in the first room R1 and the volume of air to be exhausted by the exhaust unit 12 in the first room R1 are increased as compared with the air volumes in the normal ventilation mode, and the volume of air to be exhausted by the exhaust unit 12 in the first room R1 is made greater than the volume of air to be supplied by the air supply unit 11 in the first room R1 to put the first room R1 under negative pressure.

Next, in step S140, the control unit 21 determines whether a predetermined standby time has elapsed. Specifically, the control unit 21 uses its own clock function to determine whether the standby time has elapsed since operation of the first ventilation apparatus 10a was switched to the specific ventilation mode in step S130.

In a case where the control unit 21 determines that the predetermined standby time has not elapsed, a determination of "No" is made in step S140, and step S140 is repeated. In a case where the control unit 21 determines that the predetermined standby time has elapsed, a determination of "Yes" is made in step S140, and the process returns to step S120. Even if the operation mode of the first ventilation apparatus 10a is changed from the normal ventilation mode to the specific ventilation mode, the state of pollution of indoor air in the first room R1 is not immediately improved. Therefore, the control unit 21 returns to step S120 after the predetermined standby time has elapsed.

As described above, in step S130, it is possible to promptly exhaust the polluted indoor air in the first room R1 to the outside by increasing both the volume of air to be supplied by the air supply unit 11 and the volume of air to be exhausted by the exhaust unit 12 to increase the amount of ventilation to be performed by the first ventilation apparatus 10a. In addition, it is possible to prevent polluted air in the first room R1 from leaking out of the first room R1 and polluting air in another clean room, by setting the magnitude relationship between the volume of air to be supplied by the air supply unit 11 and the volume of air to be exhausted by the exhaust unit 12 as "the volume of air to be exhausted by the exhaust unit 12>the volume of air to be supplied by the air supply unit 11" so as to put the first room R1 under negative pressure. As a result, it is possible to prevent air pollutants contained in the polluted air in the first room R1 from dispersing into rooms other than the first room R1.

Furthermore, in step S130, the air supply unit 11 can take fresh outside air into the determined pollution room.

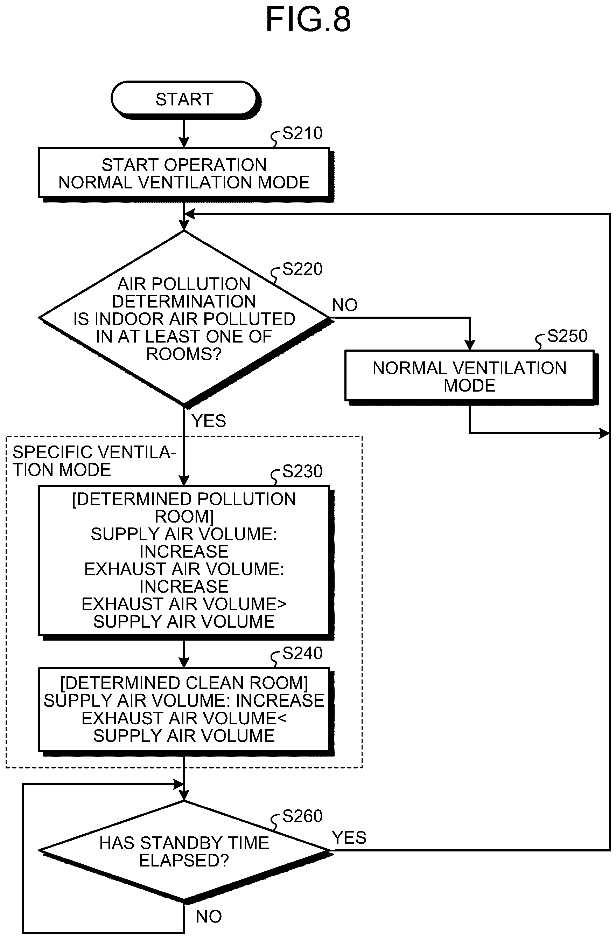

Next, a description will be given of cooperative operation of the plurality of ventilation apparatuses 10 including the ventilation apparatuses 10 of the rooms other than the first room R1. FIG. 8 is a flowchart illustrating a procedure of the cooperative operation of the plurality of the ventilation apparatuses 10 of the ventilation system 100 according to the first embodiment.

In step S210, the control unit 21 starts control of operation of the plurality of ventilation apparatuses 10 in the normal ventilation mode. The plurality of ventilation apparatuses 10 refer to the first ventilation apparatus 10a, the second ventilation apparatus 10b, the third ventilation apparatus 10c, and the fourth ventilation apparatus 10d. The volume of air to be supplied by the air supply unit 11 and the volume of air to be exhausted by the exhaust unit 12 of the first ventilation apparatus 10a in the normal ventilation mode of the plurality of ventilation apparatuses 10 are set to air volumes initially set in the storage unit 22 of the control apparatus 20 in advance. In addition, the user can change the volume of air to be supplied by the air supply unit 11 or the volume of air to be exhausted by the exhaust unit 12 of each of the plurality of ventilation apparatuses 10 by inputting instruction information for changing the volume of air to be supplied by the air supply unit 11 or the volume of air to be exhausted by the exhaust unit 12 to the control unit 21 by use of the input unit (not illustrated) provided in the ventilation system 100.

Next, in step S220, the control unit 21 performs air pollution state determination regarding the plurality of rooms where the ventilation apparatuses 10 are installed, to determine whether indoor air is polluted in at least one of the plurality of rooms where the ventilation apparatuses 10 are installed. Specifically, the control unit 21 performs control in such a way as to cause a plurality of the air pollution detection units 30 installed in the ventilation apparatuses 10 to start detection of the states of pollution of indoor air. The plurality of air pollution detection units 30 detects the states of pollution of indoor air, and transmits results of detection of the states of pollution to the control unit 21.

When the control unit 21 determines that indoor air is polluted in at least one of the plurality of rooms where the ventilation apparatuses 10 are installed, a determination of "Yes" is made in step S220, and the process proceeds to step S230. When the control unit 21 determines that indoor air is polluted in none of the rooms, a determination of "No" is made in step S220, and the process proceeds to step S250.

In step S250, the control unit 21 controls operation in the normal ventilation mode for all the plurality of rooms, and the process returns to step S220.

Meanwhile, when the control unit 21 determines that indoor air is polluted in at least one of the plurality of rooms where the ventilation apparatuses 10 are installed, steps S230 and S240 are performed as operation control in the specific ventilation mode.

In step S230, the control unit 21 performs the following control on the ventilation apparatus 10 of a determined pollution room that is the first room for which a determination that indoor air is polluted has been made. For the ventilation apparatus 10 of the determined pollution room, the control unit 21 performs control in such a way as to put the determined pollution room under negative pressure by increasing the volume of air from the air supply blower 11a to increase the volume of air to be supplied by the air supply unit 11, which is the volume of air blow to be supplied by the ventilation apparatus 10. Furthermore, in the specific ventilation mode, the control unit 21 performs control in such a way as to increase the volume of air to be exhausted by the exhaust unit 12, which is the volume of air blow to be exhausted by the ventilation apparatus 10, by increasing the volume of air from the exhaust blower 12a.

Here, the control unit 21 controls both increase of an increase in the volume of air to be supplied by the air supply unit 11 and the volume of air to be exhausted by the exhaust unit 12 such that the magnitude relationship between the volume of air to be supplied by the air supply unit 11 and the volume of air to be exhausted by the exhaust unit 12 is set as "the volume of air to be exhausted by the exhaust unit 12>the volume of air to be supplied by the air supply unit 11", that is, "the volume of air to be exhausted by the exhaust unit 12 is greater than the volume of air to be supplied by the air supply unit 11".

In step S230, it is possible to promptly exhaust the polluted indoor air from the determined pollution room to the outside by increasing both the volume of air to be supplied by the air supply unit 11 and the volume of air to be exhausted by the exhaust unit 12 for the ventilation apparatus 10 of the determined pollution room to increase the amount of ventilation to be performed by the ventilation apparatus 10 of the determined pollution room. In this case, the reason why the magnitude relationship between the volume of air to be supplied by the air supply unit 11 and the volume of air to be exhausted by the exhaust unit 12 is set as "the volume of air to be exhausted by the exhaust unit 12>the volume of air to be supplied by the air supply unit 11" is to put the determined pollution room under negative pressure so as to prevent the polluted air in the determined pollution room from leaking out of the determined pollution room and polluting air in another clean room. As a result, it is possible to prevent air pollutants contained in the polluted air in the determined pollution room from dispersing into rooms other than the determined pollution room.

It is also possible to promptly exhaust pollution components in air increasing as a result of flowing into the determined pollution room from other rooms and to sufficiently take fresh outside air into the determined pollution room, by increasing the amount of ventilation of the determined pollution room as a result of increasing the volume of air to be exhausted by the exhaust unit 12 to increase the amount of ventilation to be performed by the first ventilation apparatus 10a.

That is, in step S230, when the control unit 21 controls the volume of air to be supplied by the air supply unit 11 in the first room R1 and the volume of air to be exhausted by the exhaust unit 12 in the first room R1 in the normal ventilation mode in which the volume of air to be supplied by the air supply unit 11 is equal to the volume of air to be exhausted by the exhaust unit 12, the control unit 21 controls operation of the air supply unit 11 and the exhaust unit 12 in the specific ventilation mode in which the volume of air to be supplied by the air supply unit 11 in the first room R1 and the volume of air to be exhausted by the exhaust unit 12 in the first room R1 are increased as compared with the air volumes in the normal ventilation mode and the volume of air to be exhausted by the exhaust unit 12 in the first room R1 is made greater than the volume of air to be supplied by the air supply unit 11 in the first room R1 to put the first room R1 under negative pressure.

Next, in step S240, the control unit 21 performs the following control on the ventilation apparatus 10 of a determined clean room that is a room for which a determination that indoor air is not polluted has been made. The determined clean room is the second room in the building. For the ventilation apparatus 10 of the determined clean room, the control unit 21 performs control in such a way as to put the determined clean room under positive pressure by increasing the volume of air from the air supply blower 11a to increase the volume of air to be supplied by the air supply unit 11, which is the volume of air blow to be supplied by the ventilation apparatus 10. After step S240, the process proceeds to step S260.

Here, the control unit 21 controls an increase in the volume of air to be supplied by the air supply unit 11 such that the magnitude relationship between the volume of air to be supplied by the air supply unit 11 and the volume of air to be exhausted by the exhaust unit 12 is set as "the volume of air to be exhausted by the exhaust unit 12<the volume of air to be supplied by the air supply unit 11", that is, "the volume of air to be exhausted by the exhaust unit 12 is less than the volume of air to be supplied by the air supply unit 11".

Meanwhile, the volume of air to be exhausted by the exhaust unit 12, which is the volume of air blow to be exhausted by the ventilation apparatus 10, is not changed for the ventilation apparatus 10 of the determined clean room in step S240.

Note that, in step S240, the control unit 21 may perform control in such a way as to increase the volume of air to be exhausted by the exhaust unit 12, which is the volume of air blow to be exhausted by the ventilation apparatus 10, for the ventilation apparatus 10 of the determined clean room. However, note that even in this case, the control unit 21 controls an increase in the volume of air to be supplied by the air supply unit 11 and an increase in the volume of air to be exhausted by the exhaust unit 12 such that, as described above, the magnitude relationship between the volume of air to be supplied by the air supply unit 11 and the volume of air to be exhausted by the exhaust unit 12 is set as "the volume of air to be exhausted by the exhaust unit 12<the volume of air to be supplied by the air supply unit 11", that is, "the volume of air to be exhausted by the exhaust unit 12 is less than the volume of air to be supplied by the air supply unit 11".

Furthermore, in step S240, the control unit 21 may put the determined clean room under positive pressure by decreasing the volume of air to be exhausted by the exhaust unit 12 for the ventilation apparatus 10 of the determined clean room such that the magnitude relationship between the volume of air to be supplied by the air supply unit 11 and the volume of air to be exhausted by the exhaust unit 12 is set as "the volume of air to be exhausted by the exhaust unit 12<the volume of air to be supplied by the air supply unit 11", that is, "the volume of air to be exhausted by the exhaust unit 12 is less than the volume of air to be supplied by the air supply unit 11". In this case, the control unit 21 does not change the volume of air to be supplied by the air supply unit 11 for the ventilation apparatus 10 of the determined clean room.

Therefore, in step S240, the control unit 21 just needs to put the determined clean room under positive pressure by controlling at least one of the volume of air to be supplied by the air supply unit 11 of the determined clean room and the volume of air to be exhausted by the exhaust unit 12 of the determined clean room in the specific ventilation mode such that the volume of air to be exhausted by the exhaust unit 12 of the ventilation apparatus 10 of the determined clean room becomes less than the volume of air to be supplied by the air supply unit 11 of the ventilation apparatus 10 of the determined clean room.

The reason why the magnitude relationship between the volume of air to be supplied by the air supply unit 11 and the volume of air to be exhausted by the exhaust unit 12 for the ventilation apparatus 10 of the determined clean room is set as "the volume of air to be exhausted by the exhaust unit 12<the volume of air to be supplied by the air supply unit 11" in step S240 is that it is possible to prevent entry of air from other rooms including the determined pollution room by putting the determined clean room under positive pressure, leading to safer-side control for pollution dispersion prevention.

Next, in step S260, the control unit 21 determines whether a predetermined standby time has elapsed. Specifically, the control unit 21 uses its own clock function to determine whether the standby time has elapsed since operation of the ventilation apparatus 10 was switched to the specific ventilation mode in steps S230 and S240.

In a case where the control unit 21 determines that the predetermined standby time has not elapsed, a determination of "No" is made in step S260, and step S260 is repeated. In a case where the control unit 21 determines that the predetermined standby time has elapsed, a determination of "Yes" is made in step S260, and the process returns to step S220. Even if the operation mode of the ventilation apparatus 10 of the determined pollution room is changed from the normal ventilation mode to the specific ventilation mode, the state of pollution of indoor air in the determined pollution room will not be immediately improved. Therefore, the control unit 21 returns to step S220 after the predetermined standby time has elapsed.

In the control described above, a plurality of pollution state thresholds may be provided as determination thresholds. A first relational table is provided in the ventilation system 100 so that according to a pollution level of indoor air detected by the air pollution detection unit 30, the volume of air to be supplied by the air supply unit 11 and the volume of air to be exhausted by the exhaust unit 12 of the determined pollution room are increased in steps S130 and S230 as the air pollution level of the indoor air in the determined pollution room increases. In steps S130 and S230, the control unit 21 can perform control based on the first relational table in such a way as to increase the volume of air to be supplied by the air supply unit 11 and the volume of air to be exhausted by the exhaust unit 12 as the air pollution level of indoor air increases.

As a result, the ventilation system 100 can more reliably prevent the air pollutants contained in the polluted air in the determined pollution room from dispersing into other rooms other than the determined pollution room according to the air pollution level of the indoor air in the determined pollution room.

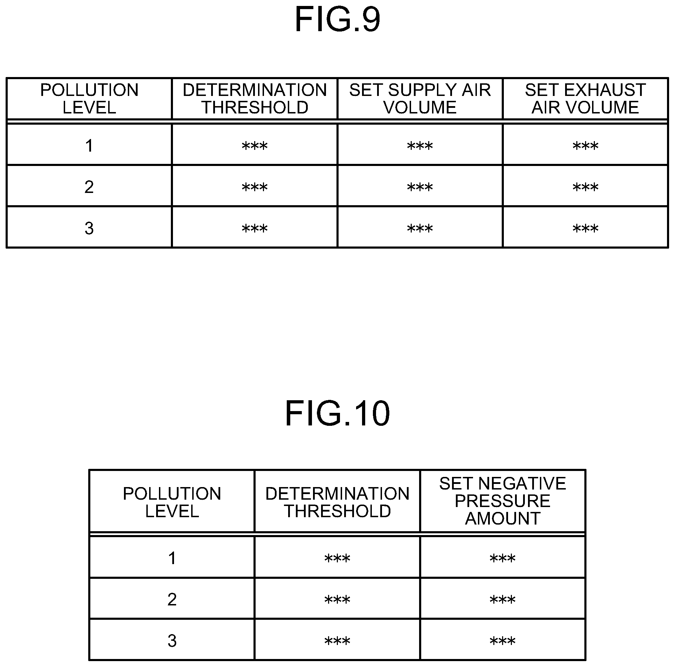

FIG. 9 is a diagram showing an example of the first relational table provided in the ventilation system 100 according to the first embodiment. The first relational table illustrated in FIG. 9 is a relational table showing relationships between a plurality of air pollution level determination thresholds and setting values of the volume of air to be supplied by the air supply unit 11 and the volume of air to be exhausted by the exhaust unit 12. The air pollution level determination threshold corresponds to a pollution state threshold which is the determination threshold described above. The first relational table is stored in, for example, the storage unit 22 of the control apparatus 20. In FIG. 9, the pollution level corresponds to the air pollution level described above, and the greater the numerical value of the pollution level, the greater the degree of pollution of indoor air.

In addition, a second relational table is provided in the ventilation system 100 so that according to a pollution level of indoor air detected by the air pollution detection unit 30, the amount of negative pressure in the determined pollution room is increased in steps S130 and S230 with an increase in the pollution level of the indoor air in the determined pollution room. In steps S130 and S230, the control unit 21 can perform control based on the second relational table in such a way as to increase the amount of negative pressure in the determined pollution room as the pollution level of indoor air increases. Based on the second relational table, the control unit 21 can perform control in such a way as to increase the negative pressure in the determined pollution room by making the volume of air to be exhausted by the exhaust unit 12 greater than the volume of air to be supplied by the air supply unit 11.

As a result, the ventilation system 100 can more reliably prevent the air pollutants contained in the polluted air in the determined pollution room from dispersing into other rooms other than the determined pollution room according to the air pollution level of the indoor air in the determined pollution room.

FIG. 10 is a diagram showing an example of the second relational table provided in the ventilation system 100 according to the first embodiment. The relational table illustrated in FIG. 10 is a relational table showing relationships between a plurality of pollution level determination thresholds and setting values of the amount of the negative pressure for the air pressure in the determined pollution room. The pollution level determination threshold corresponds to a pollution state threshold which is the determination threshold described above. The second relational table is stored in, for example, the storage unit 22 of the control apparatus 20. In FIG. 10, the pollution level corresponds to the air pollution level described above, and the greater the numerical value of the pollution level, the greater the degree of pollution of indoor air.

Furthermore, a third relational table may be provided in the ventilation system 100 so that according to the pollution level of indoor air detected by the air pollution detection unit 30, the volume of air to be supplied by the air supply unit 11 and the volume of air to be exhausted by the exhaust unit 12 of the determined pollution room, and the amount of negative pressure in the determined pollution room are all increased in steps S130 and S230 as the pollution level of the indoor air in the determined pollution room increases. The third relational table is a table in which the first relational table and the second relational table are combined. In steps S130 and S230, the control unit 21 can perform control based on the third relational table in such a way as to increase all of the volume of air to be supplied by the air supply unit 11 and the volume of air to be exhausted by the exhaust unit 12 of the determined pollution room and the amount of negative pressure in the determined pollution room as the pollution level of indoor air increases.

Therefore, the control unit 21 can perform at least one of: control for increasing the volume of air to be supplied by the air supply unit 11 of the determined pollution room and the volume of air to be exhausted by the exhaust unit 12 of the determined pollution room as the air pollution level increases which is determined based on the result of detection of the state of pollution of indoor air and the air pollution level determination thresholds; or control for increasing the negative pressure in the determined pollution room by making the volume of air to be exhausted by the exhaust unit 12 greater than the volume of air to be supplied by the air supply unit 11.

In addition, the control unit 21 may perform control such that as a differential pressure increases which is the difference in air pressure between a determined pollution room as a specific room and a determined clean room as another room, an increase in the volume of air to be supplied by the air supply unit 11 and an increase in the volume of air to be exhausted by the exhaust unit 12 of the determined pollution room become larger. That is, the control unit 21 may increase the difference between an air pressure in the determined pollution room and an air pressure in the determined clean room by increasing the negative pressure in the determined pollution room. It is possible to more reliably prevent polluted air in the determined pollution room from leaking out of the determined pollution room and polluting air in the determined clean room, by increasing the negative pressure in the determined pollution room to increase the difference between the air pressure in the determined pollution room and the air pressure in the determined clean room. This makes it possible to more reliably prevent air pollutants contained in the polluted air in the determined pollution room from dispersing into rooms other than the determined pollution room.

In this case, the differential pressure may be measured by a pressure sensor provided in each room. In addition, the amount of ventilation in each room, the degree of negative pressure, and the degree of positive pressure are known from the states of operation of the air supply unit 11 and the exhaust unit 12 of each room. The control unit 21 may determine the degree of the differential pressure based on pieces of these information.

Furthermore, when there is a determined pollution room and the door of an entrance of the determined pollution room is opened, some polluted air temporarily becomes under a state being easy to flow out to another room. Therefore, in steps S130 and S230, when the opening of the door of the determined pollution room is detected by the door opening and closing detection unit 40, the control unit 21 can prevent dispersion of pollutants by further increasing the volume of air blow to be exhausted by the ventilation apparatus 10 of the determined pollution room to increase the negative pressure in the determined pollution room while the opening of the door of the determined pollution room is detected.

In addition, in a case where there is a determined pollution room and the number of occupants in the determined pollution room is large, some polluted air becomes under a state being easy to flow out to the outside of the determined pollution room together with people going out of the determined pollution room. Therefore, in steps S130 and S230, on the basis of a result of detection performed by the occupant detection unit 50, the control unit 21 can prevent dispersion of pollutants to the outside of the determined pollution room by increasing the volume of air to be exhausted by the exhaust unit 12 of the determined pollution room so as to increase the negative pressure in the determined pollution room in accordance with the number of occupants in the determined pollution room. That is, as the number of occupants in the determined pollution room increases, the volume of air to be exhausted by the exhaust unit 12 of the determined pollution room is further increased so as to further increase the negative pressure in the determined pollution room.

Note that the above-described flowcharts illustrated in FIGS. 7 and 8 shows examples of the specific ventilation mode in which the volumes of air blow to be supplied and exhausted by the ventilation apparatus 10 are automatically set, that is, examples of the specific ventilation mode in which the air intake volume to be supplied and the air exhaust volume to be exhausted by the ventilation apparatus 10 are automatically set. In addition, it is also possible for the user to separately change the amount of ventilation for each room while maintaining the magnitude relationship between the volume of air blow to be supplied and exhausted by the ventilation apparatus 10 in each room. Using the input unit (not illustrated) provided in the ventilation system 100, the user inputs instruction information for changing the amount of ventilation for each room while maintaining the magnitude relationship between the volumes of air blow to be supplied and exhausted by the ventilation apparatus 10 of each room, that is, instruction information for changing the volume of air blow to be supplied and exhausted by the ventilation apparatus 10 for each room while maintaining the magnitude relationship between the volumes of air blow to be supplied and exhausted by the ventilation apparatus 10 of each room. Based on the instruction information, the control unit 21 controls the volumes of air blow to be supplied and exhausted by the ventilation apparatus 10 in each room.

Furthermore, in the above-described flowcharts illustrated in FIGS. 7 and 8, when the control unit 21 determines in the air pollution state determination that indoor air is not polluted, control for returning the operation mode to the normal ventilation mode and control for continuing the normal ventilation mode are performed. In addition, even when the operation mode of the ventilation apparatus 10 is set to the specific ventilation mode, only a specific administrator registered in advance in the control apparatus 20 has the authority to cancel the specific ventilation mode, and can also return the operation mode to the normal ventilation mode. In addition, only the specific administrator registered in advance in the control apparatus 20 has the authority to set the specific ventilation mode, and can also set the normal ventilation mode.

In this case, the ventilation system 100 includes an input unit that enables instruction information to be input. Furthermore, it is possible to register, in the control unit 21, an administrator who can set the specific ventilation mode or can set cancellation of the specific ventilation mode. When receiving instruction information input by the administrator via the input unit so as to instruct the control unit 21 to set the specific ventilation mode, the control unit 21 sets the specific ventilation mode, and controls operation of the ventilation apparatus 10 in the specific ventilation mode. When receiving instruction information input by the administrator via the input unit so as to instruct the control unit 21 to cancel the specific ventilation mode, the control unit 21 cancels the specific ventilation mode.

Furthermore, in the above-described flowchart illustrated in FIG. 7, in a case where, after entering the specific ventilation mode once, the control unit 21 determines in the air pollution state determination that indoor air is not polluted, control for returning the operation mode to the normal ventilation mode is performed in the process of steps S140, S120, and S150 in this order. In addition, similarly, in the above-described flowchart illustrated in FIG. 8, in a case where, after entering the specific ventilation mode once, the control unit 21 determines in the air pollution state determination that indoor air is not polluted, control for returning the operation mode to the normal ventilation mode is performed in the process of steps S260, S220, and S250 in this order.

In addition, step S150 may be omitted from the flowchart illustrated in FIG. 7 such that only the specific administrator registered in advance is allowed to cancel the specific ventilation mode, and, once the specific ventilation mode has been entered, the specific ventilation mode is forcibly continued until an instruction to cancel the specific ventilation mode is input to the control unit 21 by the specific administrator.

Similarly, step S250 may be omitted from the flowchart illustrated in FIG. 8 such that only the specific administrator registered in advance is allowed to cancel the specific ventilation mode, and, once the specific ventilation mode has been entered, the specific ventilation mode is forcibly continued until an instruction to cancel the specific ventilation mode is input to the control unit 21 by the specific administrator.

In addition, regardless of the air pollution determination made by the control unit 21 based on the result of detection performed by the air pollution detection unit 30, the specific administrator may freely set the specific ventilation mode and cancel the specific ventilation mode. When receiving instruction information input by the administrator via the input unit so as to instruct the control unit 21 to set the specific ventilation mode, the control unit 21 sets the specific ventilation mode, and controls operation of the ventilation apparatus 10 in the specific ventilation mode. When receiving instruction information input by the administrator via the input unit so as to instruct the control unit 21 to cancel the specific ventilation mode, the control unit 21 cancels the specific ventilation mode.

Furthermore, in a broad sense, detection of the state of pollution of indoor air to be performed by the air pollution detection unit 30 also includes detection of a patient suffering from a disease. For example, a patient infected with a transmissible virus discharges the virus as a pollutant. For example, the control unit 21 determines whether the body temperature of a person in a room is anomalously high on the basis of body temperature information on the person in the room detected by an image sensor, and determines whether the person in the room is a normal person or a patient. Examples of the image sensor include an image sensor capable of imaging in a wide infrared range and an image sensor capable of imaging in a visible light range.

In addition, the control unit 21 determines whether there is an anomalous posture such as a cough motion of a person in a room, a sneezing motion of the person in the room, or a falling motion of the person in the room on the basis of posture motion information regarding the person in the room detected by the image sensor, and determines whether the person in the room is a normal person or a patient.

In addition, the ventilation system 100 may include a sound collection microphone as the air pollution detection unit 30. The control unit 21 determines whether a person in the room is a normal person or a patient on the basis of cough sound information regarding the person in the room, sneeze sound information regarding the person in the room, or the like detected by the sound collection microphone.

In a case where a detection value of the body temperature information, the posture motion information, the cough sound information, or the like regarding the person in the room exceeds a predetermined threshold, the control unit 21 determines that there is a possibility that the person in the room, who is a subject, may be an "infected person". Also in this case, the control unit 21 can determine that air pollution has occurred in the room, as with the air pollution state determination based on results of detection performed by the other air pollution detection units 30.

In addition, since the ventilation air volume in the determined pollution room where pollution of indoor air has been detected is increased in the first embodiment, it is conceivable that ventilation may lead to an increase in the load of air conditioning of the determined pollution room, deterioration of thermal sensation of a person in the determined pollution room, or the like. Thus, a heat exchange ventilation apparatus may be used as the ventilation apparatus 10. For example, an integrated heat exchange ventilation apparatus equipped with an air supply unit, an exhaust unit, and a heat exchange means for heat exchange between supply air and exhaust air can prevent an increase in the load of air conditioning of the determined pollution room, deterioration of thermal sensation of a person in the determined pollution room, and the like.

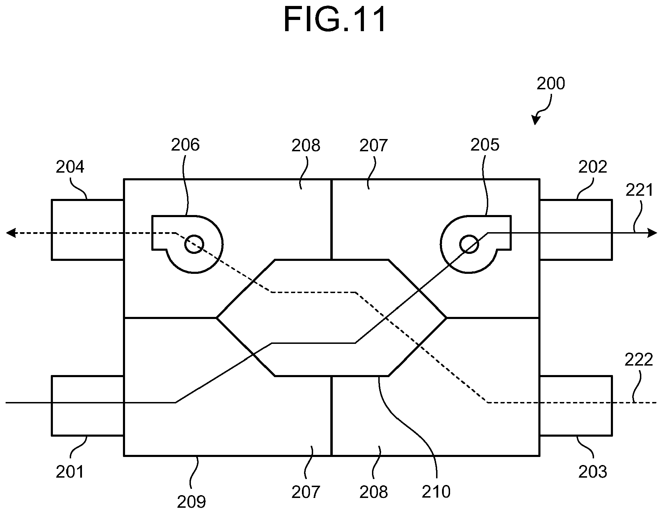

FIG. 11 is a diagram illustrating a schematic configuration of a heat exchange ventilation apparatus 200 included in the ventilation system 100 according to the first embodiment. The heat exchange ventilation apparatus 200 is a ventilation apparatus that can be used as the above-described ventilation apparatus 10. The heat exchange ventilation apparatus 200 ventilates a room by taking in a supply air flow 221 from the outside to the inside of the room and sending out an exhaust flow 222 from the inside to the outside of the room.

In addition, the heat exchange ventilation apparatus 200 causes a total heat exchange element 210 to perform total heat exchange between the supply air flow 221 and the exhaust flow 222. That is, in the heat exchange ventilation apparatus 200, indoor air and outside air pass through the total heat exchange element 210, so that total heat exchange is performed between the indoor air and the outside air.

A supply air flow path 207 through which the supply air flow 221 passes is formed inside a casing 209 of the heat exchange ventilation apparatus 200. In addition, an exhaust flow path 208 through which the exhaust flow 222 passes is formed inside the casing 209 of the heat exchange ventilation apparatus 200.

An air supply blower 205 is provided in the supply air flow path 207, which generates a flow of air from the outside toward the inside of the room. That is, the air supply blower 205 generates, as the supply air flow 221, an air flow from the outside toward the inside of the room via the supply air flow path 207. An exhaust blower 206 is provided in the exhaust flow path 208, which generates a flow of air from the inside to the outside of the room. That is, the exhaust blower 206 generates, as the exhaust flow 222, an air flow from the inside of the room toward the outside of the room via the exhaust flow path 208. FIG. 11 schematically illustrates constituent elements provided inside the casing 209.

A supply air outlet 202 and an exhaust air inlet 203 are provided on an indoor-side surface of the casing 209. A supply air inlet 201 and an exhaust air outlet 204 are provided on an outdoor-side surface of the casing 209.

In the heat exchange ventilation apparatus 200, operation of the air supply blower 205 causes outside air to be taken from the supply air inlet 201 into the supply air flow path 207 to generate the supply air flow 221. The supply air flow 221 passes through the supply air flow path 207 including the total heat exchange element 210, and is blown out into the room from the supply air outlet 202.

Furthermore, in the heat exchange ventilation apparatus 200, operation of the exhaust blower 206 causes indoor air to be taken from the exhaust air inlet 203 into the exhaust flow path 208 to generate the exhaust flow 222. The exhaust flow 222 passes through the exhaust flow path 208 including the total heat exchange element 210, and is blown out of the exhaust air outlet 204 toward the outside of the room.

In the heat exchange ventilation apparatus 200, a heat exchanger air supply unit including the supply air flow path 207 and the air supply blower 205 corresponds to the air supply unit 11 of the ventilation apparatus 10 described above.

In the heat exchange ventilation apparatus 200, a heat exchanger exhaust unit including the exhaust flow path 208 and the exhaust blower 206 corresponds to the exhaust unit 12 of the ventilation apparatus 10 described above.

As described above, the ventilation system 100 according to the first embodiment can promptly exhaust the polluted indoor air from the determined pollution room to the outside by increasing both the volume of air to be supplied by the air supply unit 11 and the volume of air to be exhausted by the exhaust unit 12 for the ventilation apparatus 10 of the determined pollution room to increase the amount of ventilation to be performed by the ventilation apparatus 10 of the determined pollution room. In addition, it is possible to prevent polluted air in the determined pollution room from leaking out of the determined pollution room and polluting air in another clean room, by setting the magnitude relationship between the volume of air to be supplied by the air supply unit 11 and the volume of air to be exhausted by the exhaust unit 12 as "the volume of air to be exhausted by the exhaust unit 12>the volume of air to be supplied by the air supply unit 11" so as to put the determined pollution room under negative pressure. As a result, it is possible to prevent air pollutants contained in the polluted air in the determined pollution room from dispersing into rooms other than the determined pollution room.

Furthermore, the ventilation system 100 according to the first embodiment can also promptly exhaust pollution components in air increasing as a result of flowing into the determined pollution room from other rooms and to sufficiently take fresh outside air into the determined pollution room, by increasing the amount of ventilation of the first room R1 as a result of increasing the volume of air to be exhausted by the exhaust unit 12 for the ventilation apparatus 10 of the determined pollution room to increase the amount of ventilation to be performed by the first ventilation apparatus 10a.

Moreover, the ventilation system 100 according to the first embodiment can prevent entry of air from other rooms including the determined pollution room into the determined clear room and perform safer-side control for pollution dispersion prevention by setting the magnitude relationship between the volume of air to be supplied by the air supply unit 11 and the volume of air to be exhausted by the exhaust unit 12 for the ventilation apparatus 10 of the determined clean room as "the volume of air to be exhausted by the exhaust unit 12<the volume of air to be supplied by the air supply unit 11" so as to put the determined clean room under positive pressure.

In addition, the ventilation system 100 according to the first embodiment does not perform ventilation by actively causing indoor air in the determined clean room to flow to the determined pollution room to be exhausted. As a result, even if indoor air in the determined clean room is somewhat polluted at an undetectable level and the air pollution detection unit 30 cannot detect the pollution, the polluted indoor air in the determined clean room is prevented from flowing to the determined pollution room. Therefore, even when pollution components is included in the indoor air in the determined clean room, the ventilation system 100 can reduce the effect of the pollution components on the determined pollution room.

Therefore, the first embodiment achieves the effect of enabling indoor air in a determined pollution room, which is a room with polluted indoor air, to be prevented from dispersing into a determined clean room and enabling fresh outside air to be taken into the determined pollution room so as to appropriately purify the indoor air in the determined pollution room.

The configurations set forth in the above embodiment show examples, and it is possible to combine the configurations with another technique that is publicly known, and is also possible to partially omit or change the configurations without departing from the scope of the present disclosure.

### Reference Signs List

10 ventilation apparatus; 10a first ventilation apparatus; 10b second ventilation apparatus; 10c third ventilation apparatus; 10d fourth ventilation apparatus; 11 air supply unit; 11a air supply blower; 12 exhaust unit; 12a exhaust blower; 13 ventilation communication unit; 20 control apparatus; 21 control unit; 22 storage unit; 23 control communication unit; 30 air pollution detection unit; 40 door opening and closing detection unit; 50 occupant detection unit; 60 exhaust fan; 100 ventilation system; 101 processor; 102 memory; 150 wall; 200 heat exchange ventilation apparatus; 201 supply air inlet; 202 supply air outlet; 203 exhaust air inlet; 204 exhaust air outlet; 205 air supply blower; 206 exhaust blower; 207 supply air flow path; 208 exhaust flow path; 209 casing; 221 supply air flow; 222 exhaust flow.

## Claims

1. A ventilation system comprising:
an air supply unit to supply air taken in from outside to an inside of a first room;
an exhaust unit to exhaust indoor air from the first room to the outside; and
a control unit to control a volume of air to be supplied by the air supply unit and a volume of air to be exhausted by the exhaust unit, wherein
the air supply unit and the exhaust unit are provided in the first room in a building, the indoor air of the first room being polluted, and
in a case where the control unit controls the volume of air to be supplied by the air supply unit in the first room and the volume of air to be exhausted by the exhaust unit in the first room in a normal ventilation mode in which the volume of air to be supplied by the air supply unit is equal to the volume of air to be exhausted by the exhaust unit, the control unit controls operation of the air supply unit and the exhaust unit in a specific ventilation mode in which the volume of air to be supplied by the air supply unit in the first room and the volume of air to be exhausted by the exhaust unit in the first room are increased as compared with the volumes in the normal ventilation mode and the volume of air to be exhausted by the exhaust unit in the first room is made greater than the volume of air to be supplied by the air supply unit in the first room so as to put the first room under negative pressure.

2. The ventilation system according to claim 1, wherein
the air supply unit and the exhaust unit are further provided in a second room in the building, the second room being a room different from the first room, indoor air of the second room being not polluted, and
in the specific ventilation mode, the control unit puts the second room under positive pressure by controlling at least one of a volume of air to be supplied by the air supply unit in the second room and a volume of air to be exhausted by the exhaust unit in the second room so as to make the volume of air to be exhausted by the exhaust unit in the second room less than the volume of air to be supplied by the air supply unit in the second room.

3. The ventilation system according to claim 2, wherein
in the specific ventilation mode, the control unit puts the second room under positive pressure by increasing the volume of air to be supplied by the air supply unit in the second room so as to make the volume of air to be exhausted by the exhaust unit in the second room less than the volume of air to be supplied by the air supply unit in the second room.

4. The ventilation system according to claim 2 or 3, wherein
the control unit increases a difference between an air pressure in the first room and an air pressure in the second room by increasing the negative pressure in the first room.

5. The ventilation system according to any one of claims 2 to 4, wherein
in the specific ventilation mode, the control unit separately changes the volume of air to be supplied by the air supply unit and the volume of air to be exhausted by the exhaust unit in the first room and the volume of air to be supplied by the air supply unit and the volume of air to be exhausted by the exhaust unit in the second room while maintaining a magnitude relationship between the volume of air to be supplied by the air supply unit and the volume of air to be exhausted by the exhaust unit in the first room and a magnitude relationship between the volume of air to be supplied by the air supply unit and the volume of air to be exhausted by the exhaust unit in the second room.

6. The ventilation system according to any one of claims 1 to 5, comprising:
an air pollution detection unit to detect states of pollution of indoor air in rooms in the building, wherein
when the control unit determines that indoor air of one room among the rooms is polluted based on results of detection of the states of pollution of the indoor air obtained by the air pollution detection unit, the control unit sets the one room as the first room and performs control for the first room in the specific ventilation mode.

7. The ventilation system according to claim 6, wherein
a plurality of air pollution level determination thresholds are provided, the air pollution level determination thresholds being used to determine an air pollution level of indoor air based on the result of detection of the state of pollution of the indoor air obtained by the air pollution detection unit, and
the control unit performs at least one of control for increasing the volume of air to be supplied by the air supply unit in the first room and the volume of air to be exhausted by the exhaust unit in the first room as the air pollution level increases, or control for increasing the negative pressure in the first room as the air pollution level increases by making the volume of air to be exhausted by the exhaust unit greater than the volume of air to be supplied by the air supply unit, the air pollution level being determined based on the result of detection of the state of pollution of the indoor air and the air pollution level determination thresholds.

8. The ventilation system according to claim 6 or 7, wherein
the air pollution detection unit detects body temperature information regarding a body temperature of a person in a room, posture motion information regarding a posture and a motion of the person in the room, and cough sound information regarding a cough given by the person in the room, and
the control unit determines whether indoor air is polluted based on at least one of the body temperature information, the posture motion information, or the cough sound information.

9. The ventilation system according to claim 6 or 7, wherein
the air pollution detection unit determines whether indoor air is polluted based on at least one of information on a concentration of carbon dioxide in the indoor air, information on a concentration of dust in the indoor air, or information on an odor from the indoor air.

10. The ventilation system according to any one of claims 1 to 9, comprising:
a door opening and closing detection unit to detect a state of opening and closing of a door of the first room, wherein
while continuing to determine that the door of the first room is open based on a result of detection performed by the door opening and closing detection unit, the control unit increases the negative pressure in the first room by increasing the volume of air to be exhausted by the exhaust unit in the first room.

11. The ventilation system according to any one of claims 1 to 10, comprising:
an occupant detection unit to detect whether there is a person in the first room, wherein
the control unit increases the negative pressure in the first room by increasing the volume of air to be exhausted by the exhaust unit in the first room according to a number of occupants in the first room, based on a result of detection performed by the occupant detection unit.

12. The ventilation system according to any one of claims 1 to 11, comprising:
a heat exchanger to perform heat exchange between outside air taken in by a heat exchanger air supply unit and indoor air exhausted by a heat exchanger exhaust unit, wherein
the air supply unit includes the heat exchanger air supply unit, and
the exhaust unit includes the heat exchanger exhaust unit.

13. The ventilation system according to any one of claims 1 to 11, comprising:
an input unit to enable instruction information to be input, wherein
the control unit allows an administrator to be registered, the administrator being allowed to set the specific ventilation mode or cancel the specific ventilation mode,
the control unit sets the specific ventilation mode when receiving an instruction to set the specific ventilation mode, the instruction being input by the administrator, and
the control unit cancels the specific ventilation mode when receiving an instruction to cancel the specific ventilation mode, the instruction being input by the administrator.
